# EUROPÄISCHE PATENTANMELDUNG

(11) **EP 1 193 142 A2**
(43) Veröffentlichungstag der Anmeldung: **03.04.2002**
(21) Anmeldenummer: 01118932.1
(22) Anmeldetag: 04.08.2001
(51) Int. Cl.: B60R 22/02

(54) **Sitz für Fahrzeuge**

(30) Priorität: 29.09.2000 DE 10048248
(71) Anmelder: Bayerische Motoren Werke Aktiengesellschaft, 80809 München (DE)
(72) Erfinder: Rackl, Rudolf, 80339 München (DE)

(57) **Zusammenfassung**

Die Erfindung bezieht sich auf einen Gurtfanghebel **(5)** an einem Seitenteil einer Sitzlehne **(3)** eines Fahrzeugsitzes **(1),** der im abgelegten Zustand den Sicherheitsgurt **(6)** auffängt und führt. Dieser Gurtfanghebel **(5)** ist an die Sitzlehne **(3)** anklappbar. Die Tauglichkeit eines Gurtfanghebels **(5)** wird wesentlich durch seine Form, insbesondere seine Länge bestimmt. Der erfindungsgemäße Gurtfanghebel **(5)** kann optimal für seine Funktion gestaltet werden, ohne Rücksicht auf den Bauraum bei einer nach hinten geschwenkten Fahrzeuglehne **(3)** nehmen zu müssen, da er an die Sitzlehne **(3)** anklappbar ist. Dadurch wird die Funktionssicherheit des Gurtfanghebels **(5)** erhöht.

## Beschreibung

Die Erfindung betrifft einen Sitz für Fahrzeuge mit einem zugeordneten Sicherheitsgurt nach den Merkmalen des Oberbegriffs des Hauptanspruchs.

Zweitürige Personenkraftwagen weisen im allgemeinen relativ breite Fahrzeugtüren auf, so dass die den Vordersitzen zugeordneten Sicherheitsgurte zumindest auf der der Fahrzeugtüre zugewandten Seite des Fahrzeugsitzes an den verhältnismäßig weit hinter der Sitzlinie angeordneten Türpfosten (B-Säule) verankert sind. Im abgelegten Zustand verlaufen daher die üblicherweise als automatische Dreipunktgurte ausgebildeten Sicherheitsgurte in einer für die Fahrzeuginsassen der Vordersitze recht ungünstigen und schlecht erreichbaren Position etwa parallel zum Türpfosten.

Aus der DE 29 08 558 C2 ist ein Sitz für ein Fahrzeug bekannt, der zum Entriegeln der Sitzlehne zwecks Umklappen ein Betätigungsteil an einem Seitenteil der Sitzlehne hat. Dieses Betätigungsteil wird gleichzeitig zum Fangen und Führen des Sicherheitsgurtes beim Einziehen in die Ablagestellung verwendet, so dass er dort von den Fahrzeuginsassen zum Wiederanlegen ergriffen werden kann.

Aufgabe der Erfindung ist es, den bekannten Sitz für ein Fahrzeug so weiterzubilden, dass die Funktion, den Sicherheitsgurt aufzufangen und zu führen, verbessert wird.

Diese Aufgabe wird durch die kennzeichnenden Merkmale des Patentanspruchs 1 gelöst.

Gemäß Patentanspruch 1 ist an einem Sitz für Fahrzeuge mit einem zugeordneten Sicherheitsgurt an einem Seitenteil der Sitzlehne ein Gurtfanghebel angebracht, der im abgelegten Zustand den Sicherheitsgurt auffängt und führt. Dieser Gurtfanghebel ist an die Sitzlehne anklappbar. Die Tauglichkeit eines Gurtfanghebels wird wesentlich durch seine Form, insbesondere seine Länge bestimmt. Die aus dem Stand der Technik bekannten Gurtfanghebel sind alle relativ kurz, da sie sonst beim nach hinten Schwenken der Sitzlehne, beispielsweise in eine Liegeposition, die hintere Seitenverkleidung des Fahrgastraumes berühren und beschädigen würden. Sie weisen daher üblicherweise eine relativ große Beabstandung zum Türpfosten (B-Säule) auf, durch die der Sicherheitsgurt unerwünschterweise am Gurtfanghebel vorbei sich in eine schwer erreichbare Position verlagern kann. Im Gegensatz dazu kann der erfindungsgemäße Gurtfanghebel vergleichsweise lang ausgeführt werden, so dass die Beabstandung zum Türpfosten (B-Säule) erheblich verkleinert wird. Dadurch wird die Funktionssicherheit des Gurtfanghebels erhöht. In den seltenen Fällen, in denen die Sitzlehne so weit nach hinten geschwenkt wird, dass die hintere Seitenverkleidung beschädigt werden könnte, kann der Gurtfanghebel an die Sitzlehne angeklappt werden. Er kann daher ohne Kompromisse bezüglich Länge und sonstiger Form gestaltet werden, zumal er keine weiteren Funktionen erfüllen muss. Damit ist er außerdem ein einfaches Bauteil, das leicht und preiswert ausgeführt werden kann.

Gemäß Patentanspruch 2 ist der Gurtfanghebel um eine Achse, die im wesentlichen in Längsrichtung der Sitzlehne verläuft, nach vorne an die Sitzlehne anklappbar. Bei dieser vorteilhaften Ausgestaltung ist sichergestellt, dass der Gurtfanghebel immer angeklappt ist, wenn die Sitzlehne so weit nach hinten geschwenkt wird, dass er in ausgeklappter Position die hintere Seitenverkleidung beschädigen würde. Das erste Berühren der Seitenverkleidung führt dabei dazu, dass der Gurtfanghebel automatisch soweit nach vorne an die Sitzlehne angeklappt wird, dass er an der hinteren Seitenverkleidung vorbeikommt, ohne sie zu beschädigen. Ein Fahrzeuginsasse muss nicht vorher daran denken, den Gurtfanghebel an die Sitzlehne anzuklappen, bevor er diese nach hinten schwenkt.

Gemäß Patentanspruch 3 muss der Gurtfanghebel beim Anklappen an die Sitzlehne einen Totpunkt überwinden, hinter dem er durch Federkraft in der angeklappten Position gehalten wird. Dadurch kann der Gurtfanghebel nicht unbeabsichtigt an-oder ausklappen. Insbesondere in Verbindung mit einer Ausführung nach Patentanspruch 2 zeigt sich dieser Vorteil deutlich: Wenn die Sitzlehne nach hinten geschwenkt wird, berührt der Gurtfanghebel anfangs die hintere Seitenverkleidung und wird dabei soweit an die Sitzlehne angeklappt, dass er den Totpunkt überwindet. Dadurch wird er durch Federkraft vollends an die Sitzlehne angeklappt. So schleift der Gurtfanghebel bei einem weiteren Schwenken der Sitzlehne nach hinten nicht an der hinteren Seitenverkleidung und kann sich bei einem Schwenken in entgegengesetzter Richtung nach vorne nicht an der hinteren Seitenverkleidung verhaken oder verkeilen.

Gemäß Patentanspruch 4 ist in den Gurtfanghebel ein Entriegelungshebel integriert, mit dem die Sitzlehne entriegelt werden kann, um sie umzuklappen. Die Integration der Funktion des Entriegelungshebels in den erfindungsgemäßen Gurtfanghebel reduziert die Zahl der seitlich an der Sitzlehne angeordneten Hebel. Dies ist ein optischer Gewinn und eine Kostenersparnis. Beispielsweise kann durch ein Drücken des Gurtfanghebels nach oben die Sitzlehne zum Umklappen entriegelt werden. Diese Entriegelung ist insbesondere bei zweitürigen Fahrzeugen notwendig, um den Fondpassagieren das Ein- und Aussteigen zu erleichtern.

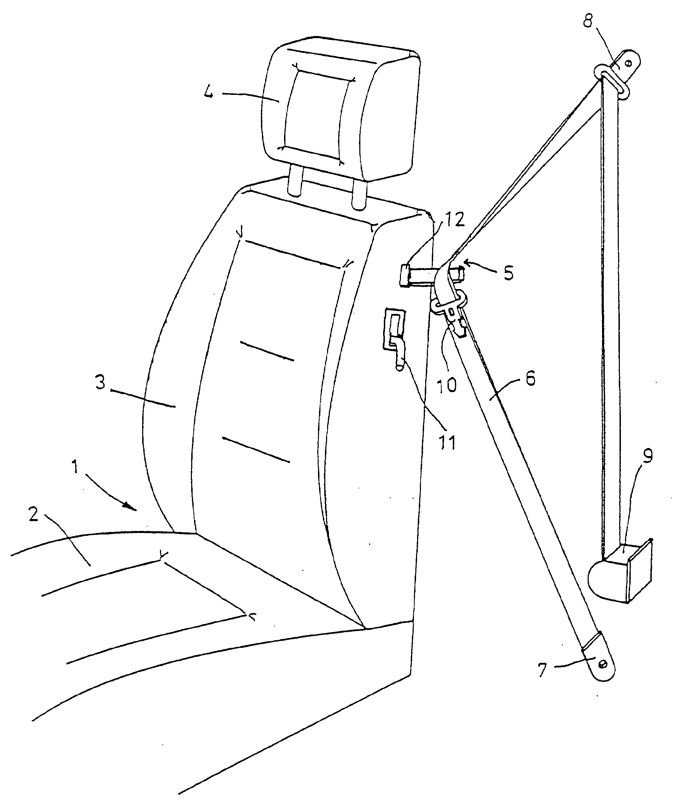

In der Zeichnung ist ein Ausführungsbeispiel der Erfindung dargestellt, das im folgenden näher erläutert wird. Die Zeichnung zeigt in schematischer Darstellungsweise eine Ansicht eines Fahrzeugsitzes mit dem erfindungsgemäßen Gurtfanghebel und einem dem Sitz zugeordneten Sicherheitsgurt.

In der Zeichnung ist mit 1 der Vordersitz eines zweitürigen Fahrzeuges bezeichnet, der eine Sitzfläche 2 und eine gegenüber dieser verschwenkbare bzw. zwecks Ermöglichung des Zugangs zu den Hintersitzen des Fahrzeuges umklappbare Sitzlehne 3 aufweist. Mit 4 ist eine in Verlängerung der Sitzlehne angeordnete Kopfstütze bezeichnet.

Die Sitzlehne 3 weist auf ihrer der hier nicht gezeigten Fahrzeugtüre zugewandten Seite nahe ihrer Oberkante einen Gurtfanghebel 5 auf. Dieser Gurtfanghebel 5 dient zum Fangen und Führen des dem Fahrzeugsitz 1 zugeordneten Sicherheitsgurtes 6 bei dessen Rückgang in die Ablagestellung.

Der Sicherheitsgurt 6 ist in herkömmlicher Weise als automatischer Dreipunkt-Sicherheitsgurt ausgebildet, und ist mit seinem unteren Ende mittels eines Gurtbeschlages 7 am unteren Ende des hier nicht weiter gezeigten Türpfostens (B-Säule) befestigt. Das andere Ende des Sicherheitsgurtes 6 ist auf einer selbsttätigen Aufwickelvorrichtung 9 aufgewickelt, die den Sicherheitsgurt 6 ständig unter einer gewissen Vorspannung hält, so dass er in seiner Rückhaltestellung straff am Körper des Fahrzeuginsassen anliegt und beim Ablegen selbsttätig in die Ablagestellung zurückgezogen wird. Die Aufwickelvorrichtung 9 ist ebenfalls an dem Türpfosten, im allgemeinen etwas oberhalb des Gurtbeschlages 7 befestigt. Der Sicherheitsgurt 6 verläuft von dort aus im wesentlichen vertikal bis zu einem ebenfalls an dem Türpfosten, jedoch in Höhe der Schultern der Fahrzeuginsassen gehaltenen Umlenkbeschlag 8. Auf dem Sicherheitsgurt 6 befindet sich noch, wie dies bei derartigen Gurtanordnungen üblich ist, eine verschiebbare Schlosseinstecklasche 10, die zwecks Anlegen des Gurtes von dem Fahrzeuginsassen ergriffen und in ein auf der anderen Seite des Sitzes im Beckenbereich angeordnetes Gurtschloss einsteckbar ist. Dieses Gurtschloss, das in der Zeichnung nicht weiter dargestellt ist, kann dabei direkt an dem seitlichen Rahmen der Sitzfläche 2 oder aber auch an einem in der Fahrzeugmitte verlaufenden Tunnel befestigt sein.

Da nun bei zweitürigen Fahrzeugen sich der Türpfosten, an dem der Umlenk-beschlag 8 des Sicherheitsgurtes 6 verankert ist, relativ weit hinter der Sitzlehne 3 des Fahrzeugsitzes 1 befindet, kann die sich in der Ablagestellung dort befindende Schlosseinstecklasche 10 von dem auf dem Vordersitz 1 sitzenden Fahrzeug-insassen nur sehr schwer und umständlich zum Anlegen des Sicherheitsgurtes 6 ergriffen werden.

Wenn nun aber gemäß der Erfindung der Gurtfanghebel 5 den Sicherheitsgurt 6 beim Einziehen in die Ablagestellung auffängt und führt, dann bleibt der Sicherheitsgurt 6 und die auf diesem verschiebbar gehaltene Schlosseinstecklasche 10 beim Rücklauf in die Ablagestellung an diesem hängen, so dass sie zwecks Wiederanlegen des Gurtes leicht und bequem vom Fahrzeuginsassen ergriffen werden kann. Darüber hinaus behindert der Gurtfanghebel 5 auch nicht den Verlauf des Sicherheitsgurtes 6 im angelegten Zustand, da lediglich ein Weggleiten des Sicherheitsgurtes 6 seitlich an der Sitzlehne 3 vorbei verhindert wird. Durch die erfindungsgemäße Ausführung des Gurtfanghebels 5 ist der Abstand zum Türpfosten (B-Säule) sehr gering, sodass der Sicherheitsgurt 6 praktisch nicht am Gurtfanghebel 5 vorbei sich nach hinten verlagern kann.

Wird nun die Sitzlehne nach hinten in eine Liegeposition geschwenkt, bleibt der Gurtfanghebel 5 mit seinem äußeren Ende an der vordersten Kante der hier nicht weiter gezeigten hinteren Seitenverkleidung hängen und klappt dadurch um seine Achse 12 nach vorne an die Sitzlehne 3. Dabei überwindet er einen Totpunkt und wird durch Federkraft an der Sitzlehne 3 anliegend gehalten. So ist zugleich sichergestellt, dass, wenn die Sitzlehne 3 wieder nach vorne geschwenkt wird, der Gurtfanghebel 5 sich nicht an der hinteren Seitenverkleidung verhaken oder verkeilen kann. Danach muss der Insasse von Hand den Gurtfanghebel 5 wieder über den Totpunkt in seine ausgeklappte Position um die Achse 12 drehen, um wieder die Vorteile des Gurtfanghebels 5 nutzen zu können.

Bei zweitürigen Fahrzeugen kommt hinzu, dass zum Erleichtern des Ein- und Aussteigens von Fondpassagieren die Sitzlehne 3 nach vorne auf die Sitzfläche 2 umgeklappt werden kann. Dazu ist ebenfalls an der der Fahrzeugtüre zugewandten Seite der Sitzlehne 3 ein Entriegelungshebel 11 vorgesehen, mit dem die Sitzlehne 3 entriegelt und nach vorne umgeklappt werden kann. Bei einer hier nicht gezeigten Ausführungsvariante ist dieser Entriegelungshebel 11 in den Gurtfanghebel 5 mit integriert. Durch ein nach oben Ziehen des Gurtfanghebels 5 kann die Sitzlehne 3 entriegelt und nach vorne umgeklappt werden.

Insgesamt gesehen wird also durch die Erfindung eine relativ einfache Möglichkeit geboten, um auch bei zweitürigen Fahrzeugen ein schnelles und bequemes Anlegen des Sicherheitsgurtes 6 zu erreichen, ohne Kompromisse bezüglich Bauraum eingehen zu müssen.

## Patentansprüche

1. Sitz für Fahrzeuge mit einem zugeordneten Sicherheitsgurt, der im abgelegten Zustand an der Sitzlehne durch ein an einem Seitenteil der Sitzlehne angebrachten Gurtfanghebel aufgefangen und geführt wird, **dadurch gekennzeichnet, dass** dieser Gurtfanghebel **(5)** an die Sitzlehne **(3)** anklappbar ist.

2. Sitz für Fahrzeuge nach Anspruch 1, **dadurch gekennzeichnet, dass** der Gurtfanghebel **(5)** um eine Achse **(12)** im wesentlichen in Längsrichtung der Sitzlehne **(3)** nach vorne an die Sitzlehne **(3)** anklappbar ist.

3. Sitz für Fahrzeuge nach Anspruch 1 oder 2, **dadurch gekennzeichnet, dass** der Gurtfanghebel **(5)** beim Anklappen einen Totpunkt überwindet, hinter dem es durch Federkraft in der angeklappten Position gehalten wird.

4. Sitz für Fahrzeuge nach einem der vorhergehenden Ansprüche, **dadurch gekennzeichnet, dass** in den Gurtfanghebel (**5**) ein Entriegelungshebel (**11**) integriert ist, mit dem die Sitzlehne (**3**) entriegelt werden kann, so dass diese umgeklappt werden kann.
